# EUROPÄISCHE PATENTANMELDUNG

(11) **EP 0 618 410 A2**
(43) Veröffentlichungstag der Anmeldung: **05.10.1994**
(21) Anmeldenummer: 94102946.4
(22) Anmeldetag: 26.02.1994
(51) Int. Cl.: F24H 1/40, F24H 8/00

(54) **Wärmetauscher für einen Brennwertkessel**

(30) Priorität: 02.03.1993 DE 4306299; 12.02.1994 DE 4404596; 12.02.1994 DE 4404595
(71) Anmelder: INTERDOMO GmbH & CO. Heizungs- und Wärmetechnik, D-48282 Emsdetten (DE)
(72) Erfinder: Nohren, Hartmut Dipl. Ing., D-48369 Saerbeck (DE); Walter, Andreas, D-49545 Tecklenburg (DE); Scholten, Gerhard, Dipl.-Ing., D-58653 Coesfeld (DE); Himmelsbach, Rainer, Dipl.-Ing., D-48282 Emsdetten (DE)
(74) Vertreter: Habbel, Hans-Georg, Dipl.-Ing.

(57) **Zusammenfassung**

Die Erfindung bezieht sich auf einen Wärmetauscher für einen Brennwertkessel, bei welchem die Rohre (1-14) vom Rücklauf (16) zum Vorlauf (17) nur einen Strömungsweg bilden, d.h. nicht geteilt werden und entweder waagerecht oder nach oben ausgerichtet angeordnet sind, so daß eine gute Entlüftung erfolgen kann und wobei die eigentlichen Rohre (1-14) des Tauschers dicht aneinander angeordnet sind und die dem Brenner gegenüberliegende Rohrreihe um 60° gegenüber der Horizontalen geneigt ist, während die Brennerflamme etwa horizontal ausgerichtet ist.

## Beschreibung

Die Erfindung bezieht sich auf einen Wärmetauscher für einen Brennwertkessel gemäß dem Oberbegriff des Hauptanspruches.

Ein gattungsbildender Wärmetauscher ist in der EP-B1-373 027 beschrieben, wobei hier die Rohrreihen so angeordnet sind, daß die Zirkulationslänge für die Wärmetragerflüssigkeit von einer Etage zur anderen von oben nach unten abnimmt. Hierbei wird der Strom der Wärmeträgerflüssigkeit im ersten einströmenden Rohr des Tauscherpaketes in zwei Flüssigkeitsströme aufgeteilt, und die Rohre sind relativ weit voneinander angeordnet, so daß keine besonders gute Ausnutzung der Wärmegase erfolgt.

Der Erfindung liegt die Aufgabe zugrunde, einen Wärmetauscher für Brennwertkessel so aufzubauen, daß eine möglichst weitgehende Ausnutzung der Wärme des Rauchgasstromes erreicht wird, gleichzeitig sichergestellt wird, daß sich die Wärmeträgerflüssigkeit in einwandfreier Weise entlüften kann.

Diese der Erfindung zugrundeliegende Aufgabe wird durch die Lehre des Hauptanspruches gelöst.

Vorteil hafte Ausgestaltungen sind in den Unteransprüchen erläutert.

Mit anderen Worten ausgedrückt wird vorgeschlagen, daß die Rohre des Wärmetauschers so angeordnet sind, daß den Heizgasen mit dem größten Wärmeinhalt auch die größte Heizfläche zugeordnet wird. Die Heizgase mit dem größten Wärmeinhalt steigen über normale Thermik in der Brennkammer nach oben, da der Brenner im wesentlichen waagerecht in die Brennkammer hineinbrennt. Die Heizgase strömen dann auf ihrem Weg zum im unteren Teil der Brennkammer angeordneten Abgasrohr nacheinander an den acht Rohren vorbei, wobei die Heizgase mit dem weniger großen Wärmeinhalt unten in der Brennkammer fließen und nur an den fünf Rohren vorbeiströmen.

Um eine maximale Kondensation des im Abgas enthaltenen Wasserdampfes zu erreichen, wurde die nachfolgend in der eigentlichen Figurenbeschreibung erläuterte konstruktive Maßnahme getroffen, d. h. der Heizwasserrücklauf oder anders ausgedrückt, das in die Brennkammer einströmende kalte Wasser, ist von dem Brenner bzw. der Brennkammer am weitesten entfernt. Die Rohre, die keiner direkten Flammenstrahlung ausgesetzt sind, werden nacheinander von dem kälteren Rücklaufwasser durchflossen, ehe sie durch das Rohr fließen, das der direkten Flammenstrahlung ausgesetzt ist.

Damit eine automatische Entlüftung der Rohre auf der Heizwasserseite gewährleistet ist, müssen die Umlenkkanäle in den Seitenwänden des Wärmetauschers mit Steigung zum Vorlauf oder mindestens waagerecht angeordnet sein. Die Rohre sollen auch sehr dicht aneinander an geordnet werden, so daß keine Gasverluste auftreten, und diese beiden Ziele werden durch die Anordnung der Rohre übereinander in einem Winkel von 60° zur Horizontalen damit im wesentlchen zur Brennerflamme erreicht.

An den oberen und unteren Seiten der Brennerkammer sind wassergekühlte Wände vorgesehen, die aus einem Strangpreßprofil aus Aluminium bestehen, wobei die in diesem Strangpreßprofil vorgesehenen Kanäle an die Wasserkanäle der Seitenwände angeschlossen sind. Die Abdichtung erfolgt bei den Rohren mit üblichen O-Ringdichtungen.

Der Erfindung liegt weiterhin die Aufgabe zugrunde, einen gattungsgemäßen Wärmetauscher dahingehend zu verbessern, daß er einen möglichst langen Betrieb mit den werkseitig berechneten und eingestellten optimalen Betriebsbedingungen ermöglicht.

Diese Aufgabe wird erfindungsgemäß durch die Ausgestaltung gemäß den Ansprüchen 12 - 19 gelöst.

Die Erfindung schlägt mit anderen Worten vor, die einem besonderen Korrosionsangriff ausgesetzten Rohre der ersten Rohrreihe, also der brennernächsten Rohrreihe, mit einer relativ glatten Oberfläche zu versehen. Auf diese Weise bleiben die Wärmeübertragungseigenschaften dieser Rohre über lange Zeit konstant und unbeeinflußt, da sich nicht ein relativ dicker Oxydmantel zwischen den Lamellen um die eigentliche Rohrwandung herum ausbilden kann und den Zutritt der heißen Gase an den eigentlichen Rohrmantel verhindern kann. Derartige Oxydmäntel können sich nämlich zwischen den Lamellen bekannter Rohre in Wärmetauschern ausbilden, jedoch auch zwischen ähnlichen Erhebungen, die beispielsweise stiftartig oder ähnlich ausgebildet sein können, wenn die Oxydschichten an den Oberflächen benachbarter Lamellen oder Erhebungen regelrecht "aufblühen" und zusammenwachsen.

Insbesondere wenn der Abstand zwischen den Wandungen der Rohre der ersten Rohrreihe größer ist als der Abstand der äußersten Konturen der nächsten Rohrreihen, kann ein optimal freier Durchtritt der Heißgase durch die erste Rohrreihe gewährleistet werden.

Um dennoch eine möglichst effiziente Wärmeübertragung von Rauchgas auf die Wärmeträgerflüssigkeit im Rohrinneren zu ermöglichen, können die Rohre der brennernächsten Rohrreihe eine gegenüber einem kreisrunden Querschnitt vergrößerte Oberfläche aufweisen. Insbesondere können sie vorteilhaft eine im wesentlichen tropfenförmige oder dreieckige Außenkontur aufweisen.

Die Außenkontur der brennernächsten Rohre kann entweder vollständig als wasserführender Querschnitt ausgelegt sein oder in ihrem Inneren ein beispielsweise rundes wasserführendes Rohr aufweisen. Die die Außenkontur bestimmenden Wandungen dienen dann als Oberflächenvergrößerung für das innere flüssigkeitsführende Rohr und begünstigen einen besonders intensiven Wärmeaustausch.

Durch die glattflächige Ausbildung kann ein sehr großer freier Strömungsquerschnitt für die Rauchgase geschaffen werden, wobei die Ausrichtung der Rohre in der vordersten Rohrreihe vorsehen kann, daß die brennernächsten Rohre mit ihrer Schmalkante jeweils in einem Zwickel zwischen zwei Rohren der benachbarten Rohrreihe enden. Auf diese Weise ist eine maximale Länge der Außenkontur der ersten Rohrreihe möglich im Sinne einer besonders intensiven Wärmeübertragung.

Insbesondere bei der Verwendung von Rohren aus Aluminium, die vergleichsweise preiswert sind und eine sehr gute Wärmeübertragung ermöglichen, ist eine Emaillierung möglich, um einen zusätzlichen Korrosionsschutz zu erreichen, so daß sich überhaupt keine Oxydschicht auf den Rohren bildet. Der Verzicht auf scharfkantige Lamellen begünstigt hierbei die Wirksamkeit der grundsätzlich kantenflüchtigen Emailbeschichtung.

Gegenüber der Ausbildung der Rohre als Lamellenrohre mit radial oder wendelförmig verlaufenden Lamellen können die Rohre vorteilhaft als Strangpreßprofil ausgebildet sein, da hierdurch eine erheblich preiswertere Herstellung der Rohre möglich ist.

Das Wechselklima schafft eine besonders korrosive Atmosphäre für die Rohre der ersten Rohrreihe, so daß diese einem vorzeitigen Verschleiß unterliegen können.

Der Erfindung liegt weiterhin die Aufgabe zugrunde, einen gattungsgemäßen Wärmetauscher dahingehend zu verbessern, daß die Haltbarkeit und Langlebigkeit des gesamten Wärmetauschers aufgrund einer verbesserten Korrosionsbeständigkeit verbessert wird.

Diese Aufgabe wird durch die Ausgestaltung gemäß den Ansprüchen 20 bis 25 gelöst.

Die Erfindung schlägt mit anderen Worten vor, die einem besonderen Korrosionsangriff ausgesetzten Rohre der ersten Rohrreihe, also der brennernächsten Rohrreihe, mit einer korrosionshemmenden Beschichtung zu versehen, um auf diese Weise sowohl die Langlebigkeit dieser Rohre zu verbessern als auch deren Wärmeübertragungseigenschaften über lange Zeit konstant und unbeeinflußt zu lassen. Die korrosionshemmende Beschichtung kann dabei auf vielfältige Weisen vorgesehen werden. So sind z. B. in Anpassung an die auftretenden Temperaturen dementsprechend temperaturbeständige Lackierungen oder Eloxierungen denkbar.

Insbesondere bei der Verwendung von Rohren aus Aluminium, die vergleichsweise preiswert sind und eine sehr gute Wärmeübertragung ermöglichen, ist eine Emaillierung möglich, um einen besonders guten Korrosionsschutz zu erreichen.

Gegenüber der Ausbildung der Rohre als Lamellenrohre mit radial verlaufenden Lamellen können die Rohre vorteilhaft als Strangpreßprofil ausgebildet sein, da hierdurch eine erheblich preiswertere Herstellung der Rohre möglich ist.

Dabei können die Rohre bewußt lamellenfrei ausgebildet sein. Die Ausbildung radialer Lamellen ist bei der Herstellung dieser Rohre als Strangpreßprofil ohnehin nicht möglich, aber auch axial verlaufende Lamellen können wahlweise an den brennernächsten Rohren nicht vorgesehen sein, um so zu verhindern, daß bei möglicherweise dennoch auftretenden Korrosionserscheinungen aufblühende Oxidationsprodukte an der Außenseite der Rohre zu einer Verengung der Strömungswege für das Rauchgas führen.

Um dennoch eine möglichst effiziente Wärmeübertragung vom Rauchgas auf die Wärmeträgerflüssigkeit im Rohrinneren zu ermöglichen, können die Rohre der brennernächsten Rohrreihe eine gegenüber einem kreisrunden Querschnitt vergrößerte Oberfläche aufweisen. Insbesondere können sie vorteilhaft eine im wesentlichen tropfenförmige oder dreieckige Außenkontur aufweisen, die entweder vollständig als wasserführender Querschnitt ausgelegt sein kann oder die in ihrem Inneren ein beispielsweise rundes wasserführendes Rohr aufweist. Das die Außenkontur bestimmende Material dient dann als Oberflächenvergrößerung für das innere flüssigkeitsführende Rohr im Sinne eines besonders intensiven Wärmeaustauschers.

Durch die glattflüssige Ausbildung kann ein sehr großer freier Strömungsquerschnitt für die Rauchgase geschaffen werden, wobei die Ausrichtung der Rohre in der vordersten Rohrreihe vorsehen kann, daß die brennernächsten Rohre mit ihrer Schmalkante jeweils in einem Zwickel zwischen zwei Rohren der benachbarten Rohrreihe enden. Auf diese Weise ist eine maximale Länge der Außenkontur der ersten Rohrreihe möglich im Sinne einer besonders intensiven Wärmeübertragung.

Ein Ausführungsbeispiel der Erfindung wird nachfolgend anhand der Zeichnungen erläutert. Die Zeichnungen zeigen in
- Fig. 1: eine Seitenansicht auf die Innenseite einer Seitenwand einer Brennkammer, in
- Fig. 2: in einer schaubildlichen Darstellung die Brennkammer von der einen Seitenwand her gesehen, in
- Fig. 3: in einer schaubildlichen Darstellung die Brennkammer von der anderen Seitenwand her gesehen, in
- Fig. 4: in einer Schemadarstellung die Anordnung der Rohre übereinander und gegenüber der Horizontalen einschl. Entlüftung, in
- Fig. 5: schematisch eine Gesamtanordnung in Form eines Schnittes durch einen Wärmetauscher und in

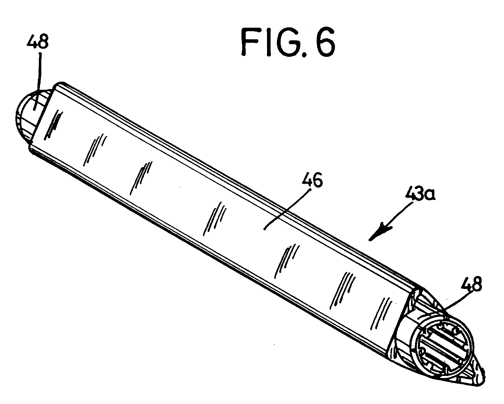

- Fig. 6: eine Ansicht auf die Stirnfläche eines Rohres der brennernächsten Rohrreihe aus dem Wärmetauscher von Fig. 5.

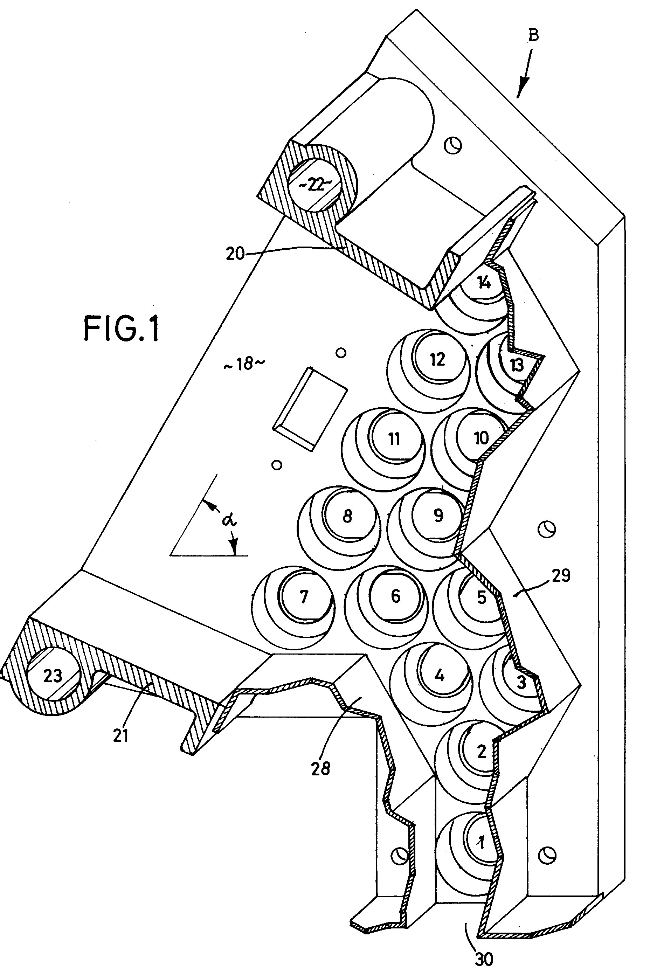

In der Fig. 1 ist die Seitenwand B eines Wärmetauschers dargestellt, wobei diese Seitenwand B einteilig aus Aluminiumguß hergestellt ist und Nuten aufweist, in die bis zur anderen Seitenwand B reichende Verbindungsplatten eingesetzt sind, von denen in Fig. 1 das obere Einsatzteil 20 und das untere Einsatzteil 21 erkennbar sind, die aus Aluminiumstrangpreßprofilen bestehen und in denen Flüssigkeitskanäle 22 und 23 ausgearbeitet sind.

Weiterhin sind Wandplatten 29 und 28 erkennbar, die den eigentlichen Wärmetauscher nach außen hin begrenzen und einen Rauchgaskanal 30 schaffen.

Zum Beispiel in der Wand B sind Bohrungen vorgesehen, die zur Aufnahme der einzelnen, die Wärmeträgerflüssigkeit führenden Lamellenrohren dienen, wobei sowohl die Lamellenrohre wie auch die Bohrungen die Bezugszeichen 1 bis 14 tragen.

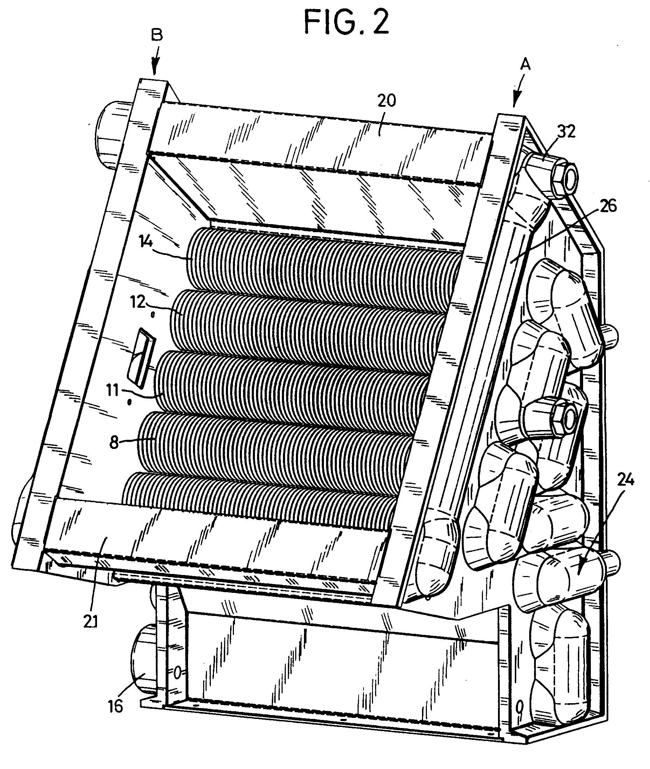

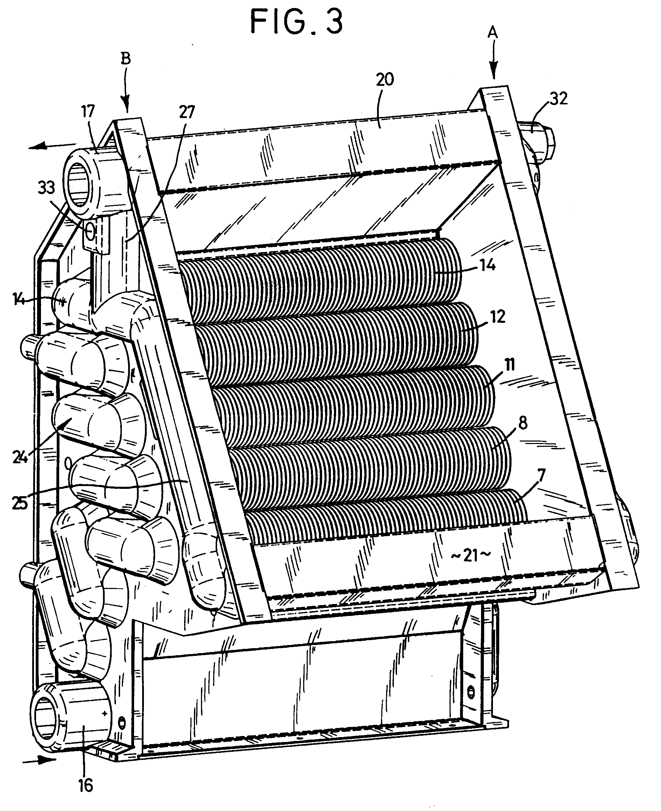

Aus den Fig. 2 und 3 sind ebenfalls die Einsatzteile 20 und 21 erkennbar sowie die Seitenwände A und B, wobei aus den Fig. 2 und 3 weiterhin erkennbar ist, daß die eigentlichen Seitenwände A und B an ihrer Außenseite ausgeformte Umlenkkanäle 24 aufweisen und weiterhin Kühlkanäle 25 und 26 besitzen, in denen zwecks Kühlung der Seitenwände A und B eine Wärmeträgerflüssigkeit geführt wird, wobei diese Kühlkanäle 25 und 26 mit den Flüssigkeitskanälen 22 und 23 in Verbindung stehen.

Die Einsatzteile 20 und 21 bestehen aus einem Aluminiumstrangpreßprofil, während die Seitenwände A und B aus einem Aluminiumguß bestehen können.

Die Zuführung der Wärmeträgerflüssigkeit erfolgt über den Rücklaufstutzen 16 zum Vorlaufstutzen 17. Bei 32 ist der Anschluß eines Thermostaten erkennbar, wobei insbesondere aus Fig. 3 erkennbar ist, daß der Umlenkkanal 24 für das oberste Rohr 14 zum Kühlkanal 25 führt, wobei in diesem oberen Bereich des Umlenkkanals 24 und des Übergangs vom Lamellenrohr 14 zum Kühlkanal 25 eine Entlüftungsleitung 27 anschließt, die bei 33 mit einer Drossel ausgerüstet ist, so daß eine Kurzschlußströmung vermieden wird, Luft aber zum Verlauf 17 entweichen kann.

Die Arbeitsweise der erfindungsgemäßen Einrichtung ist wie folgt:
Die über den Rücklaufstutzen 16 zugeführte Wärmeträgerflüssigkeit durchquert das Lamellenrohr 1 und gelangt - wie aus Fig. 2 gut erkennbar - über einen Umlenkkanal zum Lamellenrohr 2. Aus Fig. 1 ist nunmehr erkennbar, daß die Führung des Wassers, d. h. der Wärmeträgerflüssigkeit, vom Rohr 1 zum Rohr 2, vom Rohr 2 zum Rohr 3 usw. bis zum Rohr 14 erfolgt und daß dann das aufgeheizte Wasser - wie dies aus Fig. 3 erkennbar ist - zu dem Kühlkanal 25 gelangt, von dort durch den Flüssigkeitskanal 23 des Einsatzstückes 21 fließt und dann - wie dies Fig. 2 zeigt - vom Flüssigkeitskanal 23 über den Kühlkanal 26 zum Flüssigkeitskanal 23 gelangt, von wo es zum Vorlaufstutzen 17 fließt. Von der Zuführung des Wassers bis zur Abführung durch das Rohr 14 sind die Kanäle entweder waagerecht oder ansteigend ausgebildet, während eine Rückführung nach unten erst in dem Kühlkanal 25 erfolgt, so daß es dann erforderlich ist, im oberen Bereich des Übergangs von dem Rohr 14 zum Kühlkanal 25 für eine Entlüftung durch den Entlüftungskanal 27 Sorge zu tragen.

Die Heizgase der höchsten Temperatur steigen über normale Thermik in der Brennkammer 18 nach oben und diese Heizgase strömen dann auf ihrem Weg zum Rauchgaskanal 30 nacheinander an den Lamellen der Rohre 14, 13, 10, 9, 5, 3 , 2 und 1 vorbei. Die Heizgase mit etwas niedriger Temperatur befinden sich unten in der Brennkammer und strömen nur an den Lamellen der Rohre 7, 6, 4, 2 und 1 vorbei.

Um eine maximale Kondensation des im Abgas enthaltenen Wasserdampfes zu erreichen, wurde der Heißwasserrücklauf 16 an dem vom Brenner bzw. der Brennkammer am weitesten entfernten Rohr 1 angeordnet, d. h. der Rücklaufstutzen 16 schließt am Rohr 1 an. Die Lamellenrohre 1 bzw. 6 sind keiner direkten Flammenstrahlung ausgesetzt und werden nacheinander von dem kälteren Rücklaufwasser durchflossen, ehe bei dem Lamellenrohr 7 nunmehr die direkte Flammenstrahlung wirksam wird, d. h. die Heizgase strömen außer an einem der Rohre 7, 8, 11, 12 oder 14 mit direkter Flammenstrahlung noch mindestens an den Lamellen von vier weiteren Rohren ohne direkte Flammenstrahlung vorbei, nämlich den Rohren 6, 4, 2 und 1 oder 5, 3, 2, 1, an denen nur konvektive Wärme übertragen wird.

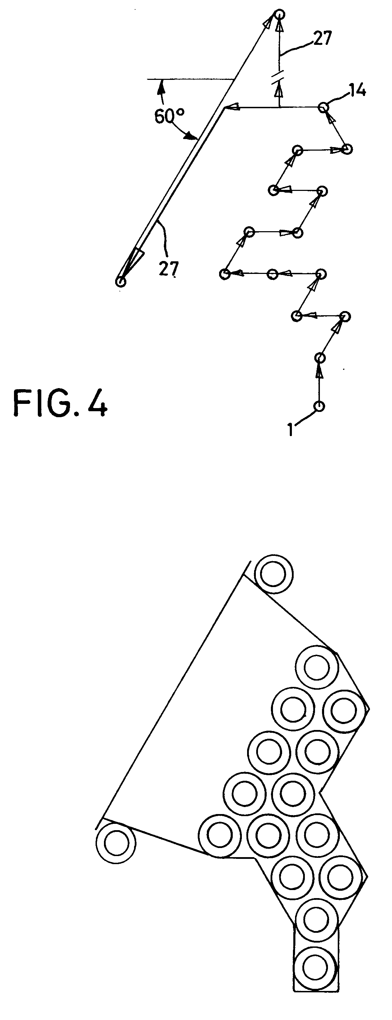

Damit eine automatische Entlüftung der Lamellenrohre auf der Heizwasserseite gewährleistet ist, müssen die Umlenkkanäle 24 in den Seitenwänden A und B des eigentlichen Wärmetauschers mit Steigung zum Vorlauf oder mindestens waagerecht sein. Dies wird, wie dies besonders deutlich die Fig. 4 zeigt, durch die Anordnung der Rohre in einem Winkel von 60° zur Horizontalen erreicht und gleichzeitig wird dabei erreicht, daß sich die Rohre auf einem gleichschenkligen Dreieck befinden, so daß sie ganz eng aneinander gelagert werden können, d. h. der Raum für den Wärmetauscher ist gering, aber die Beaufschlagung der Rohre mit den Tauschergasen ist maximal.

Im oberen Teil der Fig. 4 ist erkennbar, daß keines der Rohre nach unten geneigt ist bis auf das Kühlrohr 25. Dies wird durch den großen Pfeil verdeutlicht und daher war es erforderlich, im Übergang zwischen dem Rohr 14 zum Kühlrohr 25 die Entlüftung 27 einzuschalten.

Die eigentliche Brennkammer 18 ist wassergekühlt, wobei an der oberen und unteren Seite der Brennkammer 18 das mit einem Flüssigkeitskanal 22 bzw. 23 versehene Aluminiumstrangpreßprofil 20 bzw. 21 vorgesehen ist, wobei an die Flüssigkeitskanäle 22, 23 die Kühlkanäle 25 und 26 der Seitenwände A und B anschließen. Die Abdichtung zwischen den einzelnen Bauteilen erfolgt durch entsprechende Dichtungen.

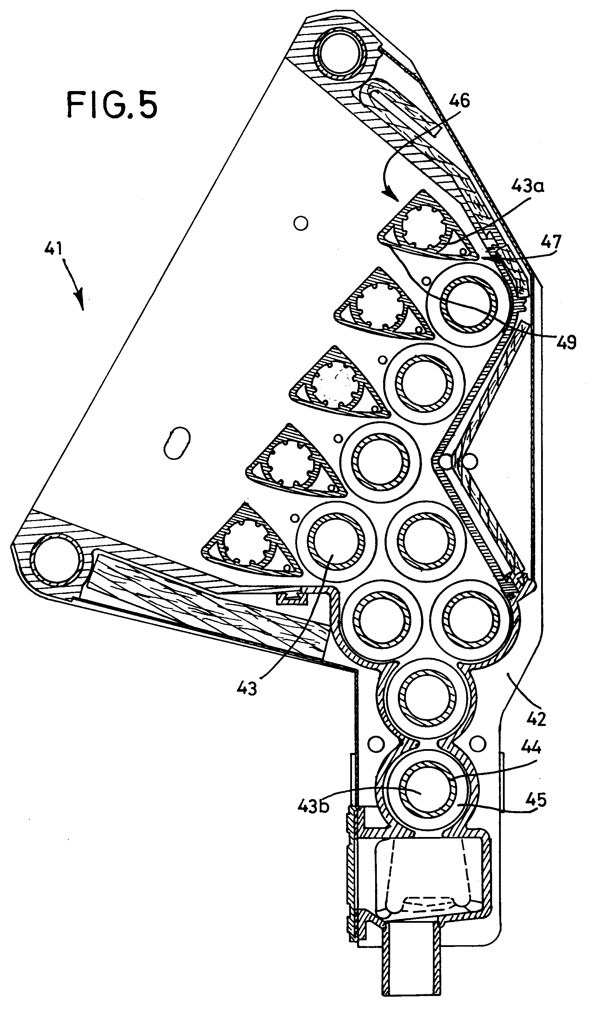

In Fig. 5 ist mit 41 allgemein ein Wärmetauscher bezeichnet, der in einem Gehäuse 42 eine Vielzahl von Rohren 43 zur Wärmeübertragung aufweist. Die einem aus Übersichtlichkeitsgründen nicht dargestellten Brenner benachbarten brennernächsten Rohre 43a sind dabei in einer Rohrreihe von fünf Rohren angeordnet, wobei die gesamte Rohrreihe einen Winkel von etwa 60° gegenüber der Horizontalen aufweist. Die den brennernächsten Rohren 43a benachbarten vier Rohre 43 bilden ebenfalls eine derartig um 60° gegenüber der Horizontalen geneigte Rohrreihe und an diese Reihe von vier Rohren 43 schließen sich zwei weitere Rohrreihen von jeweils zwei Rohren an. Das wie in der Brennwerttechnik üblich von oben nach unten geleitete Rauchgas passiert als letztes ein einzelnes unterstes Rohr 43b, welches das brennerfernste Rohr darstellt.

Die überwiegende Anzahl der Rohre 43 sind als Lamellenrohre ausgebildet und weisen eine zylindrische Rohrwandung 44 mit kreisförmigem Querschnitt auf, wobei sich außen auf der Rohrwandung 44 eine Vielzahl parallel zueinander angeordneter und radial auf dem Rohr 43 verlaufender Lamellen 45 befindet. In der Praxis kann es sich dabei auch um eine einzige wendelförmig um die Rohrwandung verlaufende Lamelle 45 handeln.

Die brennernächsten Rohre 43a sind demgegenüber als Glattrohre ausgebildet. Sie weisen eine etwa dreieckige äußere Kontur auf, wobei die brennernächsten Rohre 43a mit Stirnseiten 46 zum Brenner und mit Schmalkanten 47 in die Zwickel der nächsten Reihe von Rohren 43 gerichtet sind.

Im Gegensatz zu den übrigen Rohren 43 können die brennernächsten Rohre 43a preiswert als Strangpreßprofile gefertigt sein. Sie weisen ein inneres Rohr 48 auf, in dem die Wärmeübertragungsflüssigkeit geführt wird sowie äußere Wandungen 49, die die äußere Kontur der Rohre 43a bestimmen. Zusätzlich weisen - wie insbesondere aus Fig. 2 ersichtlich ist - die inneren Rohre 48 an den beiden Enden des Rohres 43a Stutzen auf, mit denen die Rohre 43a ähnlich wie die übrigen Rohre 43 in an sich bekannter Weise in den Seitenwangen des Wärmetauschers 41 festgelegt sind.

Die brennernächsten Rohre 43a bieten dem vom Brenner heranströmenden heißen Rauchgas mit ihren Stirnseiten 46 eine relativ große Wärmeübertragungsfläche an. Das Rauchgas streicht dann an den großen gebogenen Seitenwänden der brennernächsten Rohre 43 zu deren Schmalkanten 47, so daß auch diese groß dimensionierten Seitenwandungen 49 der brennernächsten Rohre 43a eine gute Wärmeaufnahme und Wärmeübertragung an die Wärmeträgerflüssigkeit sicherstellen.

Die brennernächsten Rohre 43a können zur Vermeidung von Korrosionseinflüssen korrosionshemmend beschichtet sein. Die negativen Auswirkungen der Korrosion, wie sie bei Lamellenrohren auftreten, sind jedoch bei den als Glattrohren ausgebildeten Rohren 43a nicht zu befürchten, da die Rohre 43a der ersten Brennerreihe sehr große freie Strömungsquerschnitte zwischen sich aufweisen, die auch dann einen guten Gasdurchsatz durch den Wärmetauscher 41 gewährleisten, wenn die Oberfläche der Rohre 43a der ersten Rohrreihe von einer Oxydschicht bedeckt sein sollte. Durch die Ausgestaltung der Rohre 43a wird verhindert, daß sich ein besonders dicker Oxydmantel zwischen den Erhebungen bilden kann, wie sie beispielsweise in Form von Lamellen bekannt sind.

Auf diese Weise ist einerseits gewährleistet, daß der freie Strömungsquerschnitt für das Rauchgas zu den nachfolgenden Rohren 43 stets ungestört und offen bleibt. Zum zweiten ist gewährleistet, daß die Wärmeübertragungseigenschaften der brennernächsten Rohre 43a über lange Zeit nahezu unverändert bleiben und nicht durch Korrosionsprodukte eingeschränkt werden.

Bei Rohren, die Lamellen oder ähnliche Erhebungen an ihrer Oberfläche aufweisen, können die Oxydschichten nämlich bis zu einer Höhe heranwachsen, die der Höhe dieser Erhebungen entspricht. Darüber hinaus werden die Oxydschichten üblicherweise durch das Heißgas abgetragen, so daß die Erhebungen eine Stützfunktion und Schutzfunktion für die Oxydschichten bilden. Ohne derartige Erhebungen können sich die Oxydschichten daher nur in geringem Maße ausbilden, so daß die üblicherweise aufgrund der Oxydschichten auftretenden Nachteile bei dem erfindungsgemäßen Wärmetauscher nicht oder in nur erheblich vermindertem Maßstab auftreten.

Im beschriebenen Ausführungsbeispiel und in den bisherigen Ausführungen ist jeweils von einem Brennwertkessel ausgegangen worden, bei dem die Zone mit dem Wechselklima im Bereich der brennernächsten Rohre liegt. Unter dieser Voraussetzung sind die brennernächsten Rohre vorteilhaft erfindungsgemäß ausgestaltet. Sollte die Zone mit dem beschriebenen Wechselklima, also einem häufigen Wechsel zwischen Trockenheit und Feuchtigkeit und dementsprechend häufig wechselnd trockenen und feuchten Rohroberflächen in Abhängigkeit von dem jeweils vorliegenden Aufbau des Wärmetauschers andere als die brennernächsten Rohre betreffen, so kann selbstverständlich in Abwandlung von dem beschriebenen Ausführungsbeispiel vorgesehen sein, andere als die brennernächsten Rohre erfindungsgemäß auszugestalten oder zusätzlich zu den brennernächsten Rohren auch andere Rohre oder gesamte andere Rohrreihen erfindungsgemäß auszubilden.

Die brennernächsten Rohre 43a können auch zur Vermeidung von Korrosionseinflüssen korrosionshemmend beschichtet werden. Insbesondere können diese brennernächsten Rohre 43a als Aluminium bestehen und eine Emaillierung als korrosionshemmende Beschichtung aufweisen. Diese korrosionshemmende Beschichtung kann dabei auf die gesamte Außenfläche des brennernächsten Rohres 43a aufgebracht sein. Sie kann sich jedoch auch auf lediglich den Bereich mit dreieckiger Außenkontur beschränken, der den Rauchgasen und der Wechselatmosphäre im Wärmetauscher 1 ausgesetzt ist, so daß beispielsweise die beiden Stützen, die das innere Rohr 8 ausbildet, nicht beschichtet sind.

Durch den Ausschluß von Korrosion ist einerseits währleistet, daß der freie Strömungsquerschnitt für das Rauchgas zu den nachfolgenden Rohren 43 stets ungestört und offen bleibt. Zum zweiten ist gewährleistet, daß die Wärmeübertragungseigenschaften der brennernächsten Rohre 43a unverändert bleiben und nicht durch Korrosionsprodukte eingeschränkt werden.

## Patentansprüche

1. Wärmetauscher für einen Brennwertkessel mit die Wärmeträgerflüssigkeit führenden Rohren (1 - 14), die in Rohrreihen gegenüber dem Brenner übereinander angeordnet sind, wobei der Zufluß der zu beheizenden Wärmeträgerflüssigkeit (Rücklauf) in der tiefsten Rohrreihe und der Abfluß der Wärmeträgerflüssigkeit (Vorlauf) in der höchsten Rohrreihe erfolgt, dadurch gekennzeichnet, daß
a) die Rohre (1 - 14) vom Rücklauf (16) zum Vorlauf (17) einen Strömungsweg bilden,
b) die Rohre (1 - 14) dicht aneinander angeordnet sind und die dem Brenner gegenüberliegende Rohrreihe um 60° gegenüber der Horizontalen geneigt ist.

2. Wärmetauscher nach Anspruch 1, dadurch gekennzeichnet, daß die Brennkammer (18) an ihrer oberen Seite und ihrer unteren Seite je durch ein flüssigkeitsgekühltes Wandteil (20, 21) begrenzt ist, dessen Flüssigkeitskanäle (22, 23) an das Rohr (14) anschließen.

3. Wärmetauscher nach Anspruch 1 oder 2, dadurch gekennzeichnet, daß die Wandteile (20, 21) als Einsatzteile (20, 21) ausgebildet sind und aus Aluminium bestehen.

4. Wärmetauscher nach einem der vorhergehenden Ansprüche, dadurch gekennzeichnet, daß die Umlenkkanäle (24) für die Rohre (1 - 14) in den Seitenwänden (A, B) ausgebildet sind.

5. Wärmetauscher nach einem der vorhergehenden Ansprüche, dadurch gekennzeichnet, daß das oberste Rohr (14) in einen in der Seitenwand (B) ausgearbeiteten Kühlkanal (25) und dieser in den Flüssigkeitskanal (23) mündet und in der gegenüberliegenden Seitenwand (A) ein Kühlkanal (26) vorgesehen ist, der den Flüssigkeitskanal (23) mit dem Flüssigkeitskanal (22) verbindet.

6. Wärmetauscher nach einem der vorhergehenden Ansprüche, dadurch gekennzeichnet, daß zwischen dem Kühlkanal (25) und dem Flüssigkeitskanal (22) eine Entlüftungsleitung (27) vorgesehen ist.

7. Wärmetauscher nach einem der vorhergehenden Ansprüche, dadurch gekennzeichnet, daß die Seitenwände (A, B) aus Aluminiumguß bestehen.

8. Wärmetauscher nach einem der vorhergehenden Ansprüche, dadurch gekennzeichnet, daß die Brennkammer aus Einzelelementen (Seitenwände A und B, Einsatzteile 20, 21, Wandplatten 28, 29) besteht, die unter Zwischenschaltung von Dichtungen miteinander verbunden sind.

9. Wärmetauscher nach einem der vorhergehenden Ansprüche, dadurch gekennzeichnet, daß der Rauchgaskanal (30) sich stufenweise verengt und in der letzten Stufe nur das Rohr (1) für den Zufluß der zu beheizenden Wärmeträgerflüssigkeit vorgesehen ist.

10. Wärmetauscher nach einem der vorhergehenden Ansprüche, dadurch gekennzeichnet, daß die Brennerflamme etwa horizontal ausgerichtet ist.

11. Wärmetauscher nach einem der vorhergehenden Ansprüche, dadurch gekennzeichnet, daß die Rohre (1 - 14) als Lamellenrohre ausgebildet sind.

12. Wärmetauscher nach einem der vorhergehenden Ansprüche, dadurch gekennzeichnet, daß die Rohre (3a) der brennernächsten Rohrreihe frei voneinander nahe benachbarten Erhebungen an ihrer Oberfläche ausgebildet sind.

13. Wärmetauscher nach Anspruch 12, dadurch gekennzeichnet, daß der Abstand zwischen den Wandungen (9) zweier benachbarter Rohre (3a) der brennernächsten Rohrreihe größer ist als der Abstand der Lamellen (5) zweier benachbarter Rohre (3) in einer anderen Rohrreihe zueinander.

14. Wärmetauscher nach einem der vorhergehenden Ansprüche, dadurch gekennzeichnet, daß die Rohre (3a) der brennernächsten Rohrreihe einen größeren freien Strömungsweg zwischen sich aufweisen als die Rohre der übrigen Rohrreihe zwischen sich.

15. Wärmetauscher nach einem der vorhergehenden Ansprüche, dadurch gekennzeichnet, daß die Rohre (3a) der brennernächsten Rohrreihe eine im wesentlichen tropfenförmige oder dreieckige Außenkontur aufweisen, wobei die Rohre (3a) mit ihren Schmalkanten (7) zwischen die Rohre (3) der nächsten Rohrreihe gerichtet sind.

16. Wärmetauscher nach einem der vorhergehenden Ansprüche, dadurch gekennzeichnet, daß die Rohre (3a) der brennernächsten Rohrreihe ein inneres Rohr (8) sowie äußere Wandungen (9) umfassen, die mit dem inneren Rohr (8) wärmeleitend verbunden sind.

17. Wärmetauscher nach einem der vorhergehenden Ansprüche, dadurch gekennzeichnet, daß die Rohre (3a) der brennernächsten Rohrreihe aus Aluminium bestehen.

18. Wärmetauscher nach einem der vorhergehenden Ansprüche, dadurch gekennzeichnet, daß die Rohre (3a) der brennernächsten Rohrreihe emailliert sind.

19. Wärmetauscher nach einem der vorhergehenden Ansprüche, dadurch gekennzeichnet, daß die Rohre (3a) der brennernächsten Rohrreihe als Strangpreßprofil ausgebildet sind.

20. Wärmetauscher nach einem der vorhergehenden Ansprüche, dadurch gekennzeichnet, daß die Rohre (3a) der brennernächsten Rohrreihe korrosionshemmend beschichtet sind.

21. Wärmetauscher nach einem der vorhergehenden Ansprüche, dadurch gekennzeichnet, daß die Rohre (3a) der brennernächsten Rohrreihe aus Aluminium bestehen.

22. Wärmetauscher nach einem der vorhergehenden Ansprüche, dadurch gekennzeichnet, daß die Rohre (3a) der brennernächsten Rohrreihe emailliert sind.

23. Wärmetauscher nach einem der vorhergehenden Ansprüche, dadurch gekennzeichnet, daß die Rohre (3a) der brennernächsten Rohrreihe als Strangpreßprofil ausgebildet sind.

24. Wärmetauscher nach einem der vorhergehenden Ansprüche, dadurch gekennzeichnet, daß die Rohre (3a) der brennernächsten Rohrreihe lamellenfrei ausgebildet sind und einen größeren freien Strömungsweg zwischen sich aufweisen als die Rohre (3) der übrigen Rohrreihen zwischen sich.

25. Wärmetauscher nach einem der vorhergehenden Ansprüche, dadurch gekennzeichnet, daß die Rohre (3a) der brennernächsten Rohrreihe eine im wesentlichen tropfenförmige oder dreieckige Außenkontur aufweisen, wobei die Rohre (3a) mit ihren Schmalkanten (7) zwischen die Rohre (3) der nächsten Rohrreihe gerichtet sind.
